Europäisches Patentamt

European Patent Office

Office européen des brevets

(19)

(11) Numéro de publication : **0 172 073 B2**

# (12) NOUVEAU FASCICULE DE BREVET EUROPEEN

(45) Date de publication du nouveau fascicule du brevet : **18.08.93 Bulletin 93/33**

(51) Int. Cl.[5] : **C11D 3/12, B01J 20/18**

(21) Numéro de dépôt : **85401442.0**

(22) Date de dépôt : **15.07.85**

(54) **Procédé d'obtention d'une suspension aqueuse stable et pompable de zéolite et suspension ainsi obtenue.**

(30) Priorité : **10.08.84 FR 8412649**

(43) Date de publication de la demande :
**19.02.86 Bulletin 86/08**

(45) Mention de la délivrance du brevet :
**07.12.88 Bulletin 88/49**

(45) Mention de la décision concernant
l'opposition :
**18.08.93 Bulletin 93/33**

(84) Etats contractants désignés :
**AT BE CH DE FR GB IT LI LU NL SE**

(56) Documents cités :
**EP-A- 0 050 894
DE-A- 2 902 236
DE-A- 3 139 858
DE-A- 3 141 136
DE-C- 1 232 686
FR-A- 2 235 994
FR-A- 2 500 474
FR-A- 2 500 475
US-A- 3 463 608**

(56) Documents cités :
**ZEITSCHRIFT FÜR ANORGANISCHE UND
ALLGEMEINE CHEMIE, vol. 404, no. 2, mars
1974, pages 129-131, Verlag J.A. Barth,
Leipzig, DD; K.-H. STEINBERG et al.: "Zahl
und Eigenschaften von Hydroxidgruppen an
CaNaY- und MgNaY-Zeolithen unterschiedlichen Austauschgrades"
"Natriumaluminiumsilikat HAB A 40",
Degussa AG, 1979
Derwent Abstract 84-222626/36 (= JP-A-
59131522)
Chem. Tech. 18, 1966, pp. 1-6, Wolf et al.
"Untersuchung der Kinetik des Ionenaustausches an synthetischen Zeolithen des Typs A"
DIN 53200 (1978)**

(73) Titulaire : **LAVIOSA RHONE-POULENC
Via Leonardo de Vinci 21
I-57123 Livourne (IT)**

(72) Inventeur : **Gresser, Robert
28, rue Soeur Bouvier
F-69005 Lyon (FR)**

(74) Mandataire : **Roggero, Sergio et al
Ing. Barzanò & Zanardo Milano S.p.A. Via
Borgonuovo 10
I-20121 Milano (IT)**

EP 0 172 073 B2

## Description

La présente invention a trait à un procédé d'obtention d'une suspension aqueuse stable et pompable de zéolite et en particulier de zéolites synthétiques.

Elle concerne également la suspension ainsi obtenue.

Il est connu de stabiliser des suspensions d'argile. Ainsi, selon le FR 1 334 965, on obtient une suspension d'argile en dispersant ladite argile dans de l'eau contenant un défloculant et un agent épaississant. Comme agent épaississant, il y est fait appel en particulier à des hydrates de carbone de poids moléculaire élevé.

De la même manière, on a proposé de stabiliser des suspensions de silico-aluminates amorphes (US 3 291 626).

Dans le FR 2 287 504, on a proposé de stabiliser des suspensions de silico-aluminates au moyen d'un agent dispersant.

Depuis, on a proposé divers additifs, la difficulté résidant dans l'obtention d'une suspension stable qui ne sédimente pas ou peu et soit pompable en vue de son introduction dans une bouillie de lessive atomisable.

Pour convenir à cette application, la bouillie de zéolite doit présenter un pH au plus égal à 11 (exprimé à 1 % en poids de zéolite anhydre) et avoir une concentration en zéolite anhydre de préférence comprise entre 40 et 50 %.

On a trouvé, et c'est ce qui fait l'objet de l'invention, un procédé de stabilisation d'une suspension aqueuse constituée essentiellement par la zéolite dans une teneur comprise entre 20 et 60 % en poids, de préférence entre 35 et 55 % en poids et tout particulièrement entre 40 et 50 % en poids, exprimée en zéolite anhydre, dont le pH, exprimé à 1 % en poids de zéolite anhydre, est compris entre 10 et 11,2, de préférence entre 10,4 et 11,2 caractérisé en qu'on ajoute à ladite suspension de 0,1 à 0,5 % de son poids de $MgCl_2$, $6H_2O$.

Dans ce qui suit on emploiera indifféremment les termes de bouillie et de suspension.

L'addition de $MgCl_2$, $6 H_2O$ permet d'éviter la formation d'un sédiment dur lors du stockage de la bouillie.

Selon l'invention le pH est apprécié pour une suspension à 1 % en poids de zéolite anhydre, sauf indication contraire.

Le chlorure de magnésium peut être ajouté soit sous forme de solution concentrée, soit sous forme pulvérulente.

La zéolite selon l'invention est notamment constituée par une zéolite de type A, telle que 4A, ou X telle que 13 X, dans le but d'obtenir une suspension pour application en détergence.

Mais on peut également appliquer l'invention à d'autres types de zéolites telles que Y.

La zéolite selon l'invention est en particulier obtenu en mettant en oeuvre un procédé selon le FR 2 376 074 ou le FR 2 392 932.

Mais, plus particulièrement, on fera appel à une zéolite de type A, notamment 4A, qui se caractérise par le fait qu'elle présente :

- un diamètre moyen des particules primaires compris entre 0,1 et 10 μm et avantageusement entre 0,5 et 5 μm.
- un pouvoir d'échange théorique de cations supérieur à 100 mg $CaCO_3$ par gramme de produit anhydre et de préférence supérieur à 200 mg ;
- une constante de vitesse $k_s$ rapportée à la surface de zéolite par litre de solution supérieure à 0,15, de préférence supérieure à 0,25 et avantageusement comprise entre 0,4 et 4 secondes $^{-1}$ litre mètre $^{-2}$.

La constante ks est appréhendée comme suit :

La vitesse d'échange initial V a pour expression :

$$V = -\frac{d(Ca^{2+})}{dt} = k\,(Ca^{2+})\,(Zéol.) = k_s\,(Ca^{2+})S.$$

avec

(Zéol.) :     concentration en zéolite exprimée en ppm de zéolite anhydre

k :     constante de vitesse du second ordre, exprimée en $s^{-1}$ $ppm^{-1}$.

S :     surface de zéolite mise en jeu par litre de solution, mesurée au microscope à balayage, exprimée en $m^2$ $1^{-1}$.

$k_s$ :     constante de vitesse rapportée à la surface de zéolite, par litre de solution, exprimée en $s^{-1}$ l $m^{-2}$.

D'autres additifs peuvent être présents.

On peut notamment réaliser des compositions de type ternaire :

- chlorure de magnesium hexahydraté
- additif organique
- additif minéral

Certains dérivés minéraux tels que les phosphates et en particulier le dihydrogéno-phosphate de sodium

(Na H$_2$ PO$_4$, 2H$_2$O), constituent des additifs permettant à la fois d'améliorer les propriétés rhéologiques de la suspension et de se situer à un niveau de pH optimal.

De façon simple, on a observé que l'on pouvait abaisser le pH de la suspension par l'action d'un agent acide, tel que l'acide chlorhydrique ou l'anhydride carbonique.

On s'est aussi aperçu qu'un résultat semblable pouvait être obtenu avec des dérivés organiques tels que :
- polyacrylates ou polyacrylamides
- copolymères d'anhydrides maléiques et d'éthers vinyliques
- carboxyméthylcelluloses
- polyoxyéthylènes

Comme dit précédemment l'invention concerne également une suspension (ou bouillie) de zéolite obtenue comme précédemment.

Cette suspension présente un pH compris entre 10 et 11,2 et un taux de matière sèche compris entre 35 et 55 %.

De plus la demanderesse a remarqué la présence de chlorure de magnésium n'affecte pas la capacité d'échange de la zéolite vis à vis du calcium.

De telles bouillies sont particulièrement appropriées à l'application en détergence.

Mais la présence invention sera plus aisément comprise à l'aide des exemples suivants donnés à titre illustratif mais nullement limitatif.

Dans ces exemples, la viscosité de la bouillie est appréciée selon la norme DIN 53788-45/8 à l'aide d'un rhéomètre CONTRAVES RM 30. La capacité d'échange du calcium a été déterminée en milieu NaCl 3 g/l selon la méthode décrite dans le brevet FR 2 528 722. La vitesse d'échange initial du calcium a été mesurée au moyen d'une « cellule à circulation forcée » - A.M. GARY et J.P. SCHWING, BULL. SOC. CHIM. 9 (1972), 3654 - A.M. GARY, E. PIEMONT, M. ROYNETTE et J.P. SCHWING. Anal. Chem. 44, (1972), 198 - A.M. GARY, THESE 3ème CYCLE STRASBOURG (1970) - pour des temps de demi-réaction suffisamment élevés et par spectrophotométrie à flux stoppé pour des temps de demi-réaction plus faibles. Ces deux dispositifs permettent d'obtenir des temps de mélange suffisamment faibles pour ne pas perturber la mesure cinétique. On suit ainsi, après mélange très rapide des réactifs, la variation de concentration en calcium avec le temps, au cours de la réaction d'échange, par spectrophotométrie en milieu hétérogène à l'aide d'un indicateur de calcium: la murexide (longueur d'onde 495 nm).

Exemple 1

Les principales caractéristiques de la zéolite utilisée dans cet exemple sont les suivantes:
- Zéolite 4A (>90%)
- Particules primaires de diamètre 1 à 2 $\mu$m
- Na$_2$O libre 0,66%
- pH (1%) 11,5
- Capacité d'échange 86 mg Ca/g de zéolite anhydre (milieu NaCl 3 g/l)
- k$_s$ = 0,6 s$^{-1}$lm$^{-2}$

Le magnésium est apporté sous forme d'une solution concentrée de chlorure de magnésium.

Les concentrations en magnésium sont exprimées en pourcentage de Mg, Cl$_2$, 6H$_2$O par rapport à la bouillie (1% de Mg Cl$_2$, 6H$_2$O correspond par exemple à une proportion pondérale de cation dans la bouillie de 0,12%).

Les caractéristiques des bouillies examinées dans cet exemple sont les suivantes:

EP 0 172 073 B2

Tableau N° I

| BOUILLIE | 1 | 2 | 3 | 4 | 5 | 6 | 7 |
|---|---|---|---|---|---|---|---|
| Concentration de la bouillie (zéolite anhydre) | 44% | 43,5% | 43% | 43% | 43% | 43% | 42,2% |
| Additif: nature, concentration dans la bouillie | 0 | $MgCl_2, 6H_2O$ 1% | $MgCl_2, 6H_2O$ 2% | $MgCl_2, 6H_2O$ 2% GANTREZ® S 95 1% (*) | $MgCl_2, 6H_2O$ 2% Polyacryl-amide 0,45% (**) | $MgCl_2, 6H_2O$ 2% $NaH_2PO_42H_2O$ 1% | $MgCl_2, 6H_2O$ 2% $NaH_2PO_42H_2O$ 1% Acide poly-acrylique 1% (***) |
| pH de la bouillie (****) | 13,4 | 13,4 | 13,4 | 11,8 | 13 | 11,6 | 11,8 |

(*) Le GANTREZ® S 95 est la forme hydrolysée d'un copolymère d'anhydride maléique et de vinyléther, utilisé sous sa forme acide.

(**) Le polyarylamide utilisé a une faible masse moléculaire (M $\sim$ 5000).

(***) L'acide polyacrylique utilisé a une masse moléculaire moyenne de 10 000.

(****) Les valeurs de pH indiquées dans ce tableau sont celles mesurées sur la suspension non diluée.

Les observations suivantes ont été effectuées:

Suspension 1

La viscosité $\eta$ de la bouillie est très élevée ($\eta > 4000$ mPa.s pour une vitesse de cisaillement D = 10 s$^{-1}$ et 2000 mPa.s$<\eta<$3300 mPa.s pour 30 s$^{-1}$<D<60 s$^{-1}$). La suspension présente un aspect légèrement « floculé », on observe une fine couche d'eau en surface et un sédiment au fond du flacon de stockage. Une telle suspension est difficilement manipulable essentiellement pour des raisons de viscosité.

Suspension 2

L'ajout de MgCl$_2$, 6H$_2$O fait chuter fortement la viscosité de la bouillie (1300 mPa.s$<\eta<$1800 mPa.s pour 30 s$^{-1}$<D<60 s$^{-1}$). Au bout de deux jours de stockage, la fluidité de la bouillie est pratiquement la même, on observe un léger sédiment facile à remettre en suspension. Au bout de huit jours de stockage, la bouillie est devenue légèrement plus visqueuse et on observe un sédiment facile à remettre en suspension; il n'y a pas de prise en masse au bout d'un mois.

Suspension 3

La bouillie est fluide (1000 mPa.s$<\eta<$1700 mPa.s pour 30 s$^{-1}$<D<60 s$^{-1}$) et conserve sa fluidité pendant huit à quinze jours. On observe la formation d'un léger sédiment facile à remettre en suspension. Il n'y a pas de prise en masse au bout d'un mois de stockage.

Suspension 4

La bouillie est très fluide (700 mPa.s$<\eta<$1000 mPa.s pour 30 s$^{-1}$<D<60 s$^{-1}$), il est intéressant de noter qu'à très faible gradient de vitesse (D<5 s$^{-1}$), la viscosité ne dépasse guère 2000 mPa.s. La tenue au stockage de cette suspension est bonne: au bout de huit jours, on observe un léger sédiment facile à remettre en suspension. Au bout d'un mois de stockage la bouillie présente le même aspect.

Suspension 5

La bouillie a une bonne fluidité (100 mPa.s$<\eta<$1600 mPa.s pour 30 s$^{-1}$<D<60 s$^{-1}$). La tenue au stockage est bonne; on observe au fond du flacon un léger sédiment facile à remettre en suspension au bout d'un mois de stockage.

Suspension 6

La bouillie est très fluide (700 mPa.s$<\eta<$1000 mPa.s pour 30 s$^{-1}$<D<60 s$^{-1}$), il est intéressant de noter qu'à très faible gradient de vitesse (D<5 s$^{-1}$), la viscosité ne dépasse guère 2000 mPa.s. La tenue au stockage de cette suspension est bonne: au bout de nuit jours, on observe un léger sédiment facile à remettre en suspension. Au bout d'un mois de stockage, la bouillie présente le même aspect.

Suspension 7

La bouillie est très fluide et on n'observe pas de sédiment au bout d'un mois de stockage.

Cet exemple monte que pour une valeur élevée du pH, la bouillie est très visqueuse. Dans ces conditions, l'ajout de magnésium a un effet fluidifiant sur la suspension. L'ajout d'additifs améliore encore la fluidité et la tenue au stockage de la bouillie et permet également d'abaisser le pH à des valeurs compatibles avec l'application en détergence. Les pH des bouillies 4, 6, et 7 mesurés sur des bouillies non diluées sont compris entre 11,6 et 11,8, ce qui correspond à des pH (à 1%)<11.

Exemple 2

La zéolite utilisée dans cet exemple présente les caractéristiques suivantes:
- Zéolite 4A (>90%)
- Particules primaires de diamètre 1 à 2 $\mu$m
- Na$_2$O libre: 0,73%

- pH (1%): 11,2
- Capacité d'échange: 89 mg Ca/g zéolite anhydre (milieu NaCl 3 g/l)
- $k_s = 0.5 \ s^{-1}.l.m^{-2}$

Sauf indication contraire, le chlorure de magnésium est apporté comme à l'exemple 1 sous forme de solution concentrée.

Les caractéristiques des bouillies préparées sont les suivantes:

EP 0 172 073 B2

Tableau N° II

| BOUILLIE | 8 | 9 | 10 | 11 | 12 | 13 |
|---|---|---|---|---|---|---|
| Concentration de la bouillie (zéolit anhydre) | 45% | 42,8% | 42,8% | 42,8% | 42,8% | 42,8% |
| Additif: nature et concentration | 0 | $MgCl_2$, $6H_2O$ | $MgCl_2$, $6H_2O$ | $MgCl_2$, $6H_2O$ | $MgCl_2$, $6H_2O$ | $MgCl_2$, $6H_2O$ |
| dans la bouillie | | 0,1% | 0,25% | 0,5% | 1% | 2% |
| pH de la bouillie (non diluée) | 12,9 | 12,8 | 12,7 | 12,7 | 12,6 | 12,6 |
| pH (1%) | 11,2 | 11 | 10,9 | 10,8 | 10,8 | 10,7 |

Les observations suivantes ont été effectuées:

Suspension 8

La bouillie est très fluide mais présente, après quelques heures de stockage, un sédiment dur et très difficile à remettre en suspension.

Suspensions 9 et 10

La fluidité de la bouillie reste excellente et on observe, après un mois de stockage, un sédiment facile à remettre en suspension, de telles bouillies peuvent être stockées plus d'un mois et sont facilement manipulables.

Suspension 11

La bouillie est plus visqueuse, mais reste cependant manipulable. On observe au bout d'un mois de stockage un sédiment facile à remettre en suspension.

Suspensions 12 et 13

Ces bouillies ont un aspect pâteux qui rend leur manipulation plus difficile.

Cet exemple montre que si le pH de la bouillie n'est pas trop élevé, sa fluidité est excellente, mais on observe la formation d'un sédiment dur et difficile à remette en suspension. L'addition d'une faible quantité de magnésium conserve la bonne fluidité de la bouillie et permet son stockage pendant plus d'un mois. Au-delà d'une concentration de 0,5% de magnésium exprimée en $MgCl_2$, $6H_2O$, on observe une augmentation de la viscosité de la bouillie, ce qui pose des problèmes de manipulation.

On a vérifié qu'en augmentant le pH de la suspension n° 12 (au moyen de pastilles de soude pour maintenir constante la concentration en zéolite) jusqu'à une valeur de 13,1 mesurée sur la bouillie non diluée, on augmentait la fluidité de la bouillie: ceci confirme le fait qu'à pH élevé, le magnésium a un effet fluidifiant (voir suspension n° 2). Par ailleurs, on a observé que la fluidité de cette bouillie était encore améliorée par l'ajout d'une faible quantité de $MgCl_2$, $6H_2O$.

On remarquera que dans des conditions où le pH initial de la bouillie n'est pas trop élevé (dans le cas présent pH à 1% égal à 11,2), l'ajout de magnésium permet d'abaisser le pH à des valeurs compatibles avec l'application en détergence (pH à 1%<11).

Enfin, on a vérifié que l'addition de 0,1% de $MgCl_2$, $6H_2O$ sous forme pulvérulente à une suspension contentant 45% de zéolite anhydre conduisait au même résultat que celui de l'essai 9.

Exemple 3

Cet exemple a pour but d'examiner l'influence de l'ajout de magnésium à la bouillie sur les propriétés échangeuses de la zéolite. Les suspensions initiales de zéolite utilisées dans cet exemple sont les mêmes que celles utilisées aux exemples 1 et 2. Elles sont respectivement notées A et B.

Les résultats obtenus ont été portés sur le tableau suivant:

Tableau N° III

| $MgCl_2$, $6H_2O$ % | pH de la boullie (non diluée) | | Capacité d'échange mg Ca/g zéolité anhydre | |
| --- | --- | --- | --- | --- |
| | Bouillie A | Bouillie B | Bouillie A | Bouillie B |
| 0 | 13,4 | 12,9 | $86 \pm 7$ | $89 \pm 7$ |
| 0,1 | 13,4 | 12,8 | $61 \pm 6$ | $94 \pm 7$ |
| 0,25 | 13,4 | 12,7 | $58 \pm 6$ | $95 \pm 7$ |
| 0,5 | 13,4 | 12,7 | $54 \pm 6$ | $84 \pm 7$ |
| 1 | 13,4 | 12,6 | $58 \pm 6$ | $89 \pm 7$ |
| 2 | 13,4 | 12,6 | $51 \pm 6$ | $86 \pm 7$ |

Ces résultats montrent que si le pH de la bouillie est élevé, l'ajout de magnésium réduit la capacité d'échange du calcium par la zéolite. Si le pH initial de la bouillie n'est pas trop élevé (dans le cas pH = 12,9, ce qui correspond à un pH à 1% de 11,2), l'ajout de magnésium n'affecte pas la capacité d'échange de la zéolite.

On a également vérifié que l'ajout à la bouillie de zéolite d'une concentration en $MgCl_2$, $6H_2O$ inférieure à 1% n'affectait pas la valeur de $k_s$.

## Exemple 4

Cet exemple a pour but d'examiner l'influence de l'ajout de $MgCl_2$, $6H_2O$ à une bouillie de zéolite dont le pH initial (exprimé à 1% en poids de zéolite anhydre) est inférieur à 11. Les caractéristiques de la zéolite utilisée sont les suivantes:
- Zéolite 4A (>90%)
- Particules primaires de diamètre 1 à 2 $\mu$m
- $Na_2O$ libre: 0,40%
- pH (1%): 10,4
- Capacité d'échange: 100 mg Ca/g de zéolite anhydre (milieu Nacl 3 g/l)
- $k_s = 0,6\ s^{-1}\ l\ m^{-2}$.

Les caractéristiques des bouillies examinées dans cet exemple sont les suivantes:

| BOUILLIE | 1 | 2 |
|---|---|---|
| Concentration de la bouillie (zéolite anhydre) | 48% | 48% |
| Additif: nature et concentration dans la bouillie | 0 | $MgCl_2$, $6H_2O$<br>0,1% |
| pH (1%) | 10,4 | 10,4 |

Les observations suivantes ont été effectuées:

## Bouillie 1

La bouillie est fluide mais présente, après quelques heures de stockage, un sédiment dur et très difficile à remettre en suspension.

## Bouillie 2

La viscosité de la bouillie augmente légèrement et au bout d'une semaine de stockage, on observe un léger sédiment facile à remettre en suspension. Une telle bouillie est manipulable dans de bonnes conditions.

Cet exemple montre que l'ajout de $MgCl_2$, $6H_2O$ à une bouillie de zéolite dont le pH (à 1%) est de 10,4 permet son stockage pendant plus d'une semaine et sa manipulation dans de bonnes conditions.

## Exemple 5

Cet exemple a pour but d'examiner l'influence d'un abaissement du pH d'une bouillie contenant du magnésium, sur sa stabilité et sa tenue au stockage. Les caractéristiques de la zéolite utilisée sont les suivantes:
- Zéolite 4A (>90%)
- Particules primaires de diamètre 1 à 2 $\mu$m
- $Na_2O$ libre: 0,73%
- pH (1%): 11,2
- Capacité d'échange: 89mg Ca/g zéolite anhydre (milieu NaCl 3 g/l)
- $k_s = 0,5\ s^{-1}\ l\ m^{-2}$

L'abaissement du pH a été provoqué par l'ajout d'acide chlorhydrique concentré, les caractéristiques des bouillies examinées sont les suivantes:

| BOUILLIE | 3 | 4 |
|---|---|---|
| Concentration de la bouillie (zéolite anhydre) | 42,8% | 42,8% |
| Additif: nature et concentration | $MgCl_2, 6H_2O$ | $MgCl_2, 6H_2O$ |
| dans la bouillie | 0,1% | 0,1% |
| pH (1%) | 10,9 | 10,4 |

Les observations suivantes ont été effectuées:

Bouillie 3

La bouillie est fluide et on observe, après un mois de stockage, un sédiment facile à remettre en suspension. Une telle bouillie peut être stockée plus d'un mois et est manipulable dans de bonnes conditions.

Bouillie 4

On n'observe pas d'augmentation de la viscosité de la bouillie et sa stabilité au stockage est comparable à celle de la bouillie n° 3.

Cet exemple montre qu'un abaissement du pH d'une bouillie de zéolite stabilisée au chlorure de magnésium ne modifie pas sa tenue au stockage.

**Revendications**

1. Procédé de stabilisation d'une suspension aqueuse constituée essentiellement par de la zéolithe dans une teneur comprise entre 20 et 60 %, exprimée en zéolithe anhydre, dont le pH, exprimé à 1 % en poids de zéolithe anhydre est compris entre 10 et 11,2, caractérisé en ce qu'on ajoute à ladite suspension de 0,1 à 0,5 % de son poids de $MgCl_2, 6H_2O$.

2. Procédé selon la revendication 1 caractérisé en ce que le pH, exprimé à 1 % en poids de zéolite anhydre est compris entre 10,4 et 11,2.

3. Procédé selon la revendication 1 ou 2 caractérisé en ce que la dite suspension aqueuse présente un extrait sec, exprimé en matière anhydre compris entre 35 et 55 % en poids.

4. Procédé selon l'une quelconque des revendications 1 à 3 caractérisé en ce que la zéolithe est de type 4A et présente :
   - un diamètre moyen des particules primaires compris entre 0,1 et 10 µm,
   - un pouvoir d'échange théorique de cation supérieur à 100 mg de $CaCO_3$ par gramme de produit anhydre et de préférence supérieur à 200 mg,
   - une constante de vitesse $k_s$ rapportée à la surface de zéolithe par litre de solution supérieure à 0,15 seconde$^{-1}$ litre mètre$^{-2}$.

**Patentansprüche**

1. Verfahren zur Stabilisierung einer im wesentlichen aus Zeolith bestehenden wässrigen Suspension mit einem Gehalt zwischen 20% und 60% ausgedrückt als wasserfreier Zeolith, wobei der pH-Wert, bezogen auf ein Gewichtsprozent wasserfreien Zeolith zwischen 10 und 11,2 beträgt, **dadurch gekennzeichnet,** daß man der besagten Suspension 0,1 % bis 0,5 ihres Gewichtes an $MgCl_2, 6 H_2O$ hinzufügt.

2. Verfahren nach Anspruch 1, **dadurch gekennzeichnet,** daß der pH-Wert bezogen auf ein Gewichtsprozent wasserfreien Zeolith zwischen 10,4 und 11,2 beträgt.

3. Verfahren nach einem der Ansprüche 1 oder 2, **dadurch gekennzeichnet,** daß die besagte wässrige Suspension einen Trockengehalt zwischen 35 und 55 Gewichtsprozent bezogen auf wasserfreies Material aufweist.

4. Verfahren nach einem der Ansprüche 1 bis 3, **dadurch gekennzeichnet,** daß der Zeolith vom Typ 4A ist und aufweist:
   - einen mittleren Durchmesser der Primärteilchen zwischen 0,1 μm und 10 μm.
   - ein theoretisches Katyonenaustauschvermögen von über 100 mg $CaCO_3$/g wasserfreies Produkt vorzugsweise von über 200 mg,
   - eine Geschwindigkeitskonsante $k_s$ bezogen auf die Zeolithoberfläche pro Liter Lösung von über 0,15 Sekunden$^{-1}$ Liter Meter$^{-2}$

**Claims**

1. A process for producing a stable aqueous suspension essentially formed by zeolite in a proportion of between 20 and 60% expressed as anhydrous zeolite, the pH of which, expressed at 1% by weight of anhydrous zeolite is between 10 and 11.2, characterised in that added to said suspension is from 0.1 to 0.5% of its weight of $MgCl_2$, $6H_2O$.

2. A process according to Claim 1, characterised in that the pH, expressed at 1% by weight of anhydrous zeolite is between 10.4 and 11.2.

3. A process according to Claim 1 or Claim 2, characterised in that said aqueous suspension has a dry extract, expressed in anhydrous matter of between 35 and 55% by weight.

4. A process according to any one of Claims 1 to 3, characterised in that the zeolite is of the 4A type and has:
   - a mean diameter of the primary particles of between 0.1 and 10 μm,
   - a theoretical cation exchange capacity greater than 100 mg of $CaCO_3$ per gramme of anhydrous product and preferably greater than 200 mg,
   - a speed constant $k_s$ related to the surface area of zeolite per litre of solution that is higher than 0.15 second$^{-1}$ litre metre$^{-2}$.